# EUROPEAN PATENT APPLICATION

(11) **EP 2 202 563 A1**
(43) Date of publication of application: **30.06.2010**
(21) Application number: 09168576.8
(22) Date of filing: 25.08.2009
(51) Int. Cl.: G02F 1/13357, H05B 33/08

(54) **Electronic apparatus and backlight unit for the same**

(30) Priority: 24.12.2008 KR 20080133247
(71) Applicant: Samsung Electronics Co., Ltd., Suwon-si, Gyeonggi-do 442-742 (KR)
(72) Inventor: Yu, Byung-cheol, Suwon-si, Gyeonggi-do (KR)
(74) Representative: Robinson, Ian Michael

(57) **Abstract**

An electronic apparatus (1) having a heat discharging structure which divides light driving sources (30,100) into driving devices (40,110) generating relatively high heat and driving devices (50,130) generating relatively low heat, and a backlight unit for the electronic apparatus (1) is provided. The electronic apparatus (1) includes a liquid crystal display (LCD) panel; a light source module (10) having a light source (12) illuminating the LCD panel and a first board (14) mounting the light source (12) thereon; and a driving module (30,100) having a first driving device (40,110) mounted on the first board (14) and a second driving device (50,130) disposed separately from the first driving device (40,110).

## Description

### BACKGROUND OF THE INVENTION

### 1. Field of the Invention

Apparatuses and methods consistent with the present invention relate to a electronic apparatus and a backlight units for the electronic apparatus, and more particularly, to an electronic apparatus having driving devices that drive light sources, and a backlight unit for the electronic apparatus.

### 2. Description of the Related Art

Some electronic apparatuses, such as video apparatuses, refrigerators storing foods for a long period of time, and so on, may include a display unit which display a state of the electronic apparatus thereon, etc. These display units may include crystal display (LCD) panels.

A display unit configured with an LCD panel cannot emit light itself, thus, a light source is used. As such, the display unit configured with the LCD panel is provided with a driving module supplying electronic current to the light source, in order to make the light source emit light.

However, in such related art apparatuses, the driving module and the light source emitting light may have high heating values, and inefficient heat discharging capability.

### SUMMARY OF THE INVENTION

According to the present invention there is provided a backlight unit and an electronic apparatus as set forth in the appended claims. Other features of the invention will be apparent from the dependent claims, and the description which follows.

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

According to an exemplary aspect of the present invention, there is provided an electronic apparatus including: a liquid crystal display (LCD) panel; a light source module having a light source illuminating light to the LCD panel and mounted on a first board mounting the light source thereon; and a driving module having a first driving device mounted on the first board and a second driving device disposed separately from the first driving device.

The first driving device may include a switching element.

The first driving device may include a switching element, a capacitor and a diode.

The switching element, the capacitor and the diode may be separately mounted on the first board.

The switching element, the capacitor and the diode may be integrally formed and mounted on the first board.

The switching element may include one of a field-effect transistor (FET) and an insulated gate bipolar transistor (IGBT).

The light source may include a light-emitting diode (LED) chip.

The apparatus may include a panel driving unit driving the LCD panel and a second board mounting the panel driving unit and the second driving device thereon.

The second driving device may include a diode, a capacitor, a pulse width modulation (PWM) controller, an inductor and a feedback circuit.

The second driving device may include a PWM controller, an inductor and a feedback circuit.

Another exemplary aspect of the present invention is achieved by providing a backlight unit for an electronic apparatus, comprising: a light source module having a light source and a first board mounting the light source thereon; and a driving module having a first driving device mounted on the first board and a second driving device disposed separately from the first driving device.

The first driving device may include a switching element.

The first driving device may include a switching element, a capacitor and a diode.

The switching element, the capacitor and the diode may be separately mounted on the first board.

The switching element, the capacitor and the diode may be integrally formed and mounted on the first board.

The switching element may include one of a field-effect transistor (FET) and an insulated gate bipolar transistor (IGBT).

The second driving device may include a diode, a capacitor, a PWM controller, an inductor and a feedback circuit.

The second driving device may include a PWM controller, an inductor and a feedback circuit.

The second driving device may be mounted on a second board.

### BRIEF DESCRIPTION OF THE DRAWINGS

The above and other aspects of the present invention will become apparent and more readily appreciated from the following description of the exemplary embodiments, taken in conjunction with the accompanying drawings of which:
FIG. 1A is a control block diagram of an electronic apparatus according to a first exemplary embodiment of the present invention;
FIG. 1B is a control block diagram of an electronic apparatus according to a second exemplary embodiment of the present invention;
FIG. 2 is a schematic circuit diagram of an electronic apparatus according to the first exemplary embodiment of the present invention;
FIG. 3 is a circuit diagram using another switching element according to the first exemplary embodiment of the present invention;
FIG. 4 a schematic circuit diagram of an electronic apparatus according to the second exemplary embodiment of the present invention; and
FIG. 5 is a modified circuit diagram according to an exemplary embodiment of the present invention.

### DETAILED DESCRIPTION OF THE EXEMPLARY EMBODIMENTS

Hereinbelow, an electronic apparatus according to exemplary embodiments of the present invention and a backlight unit for the electronic apparatus will be described in detail with reference to the accompanying drawings.

For reference, like reference numerals refer to the like elements throughout, but driving modules have different reference numerals according to different exemplary embodiments.

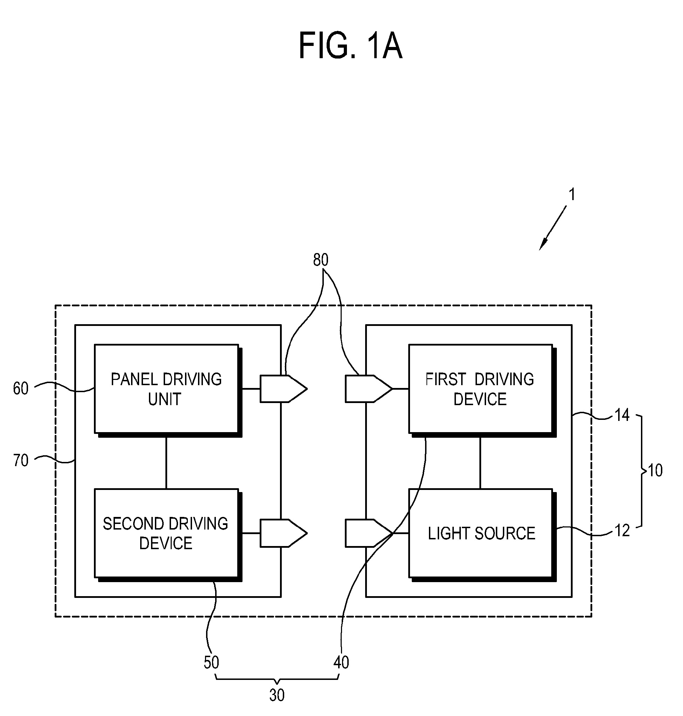

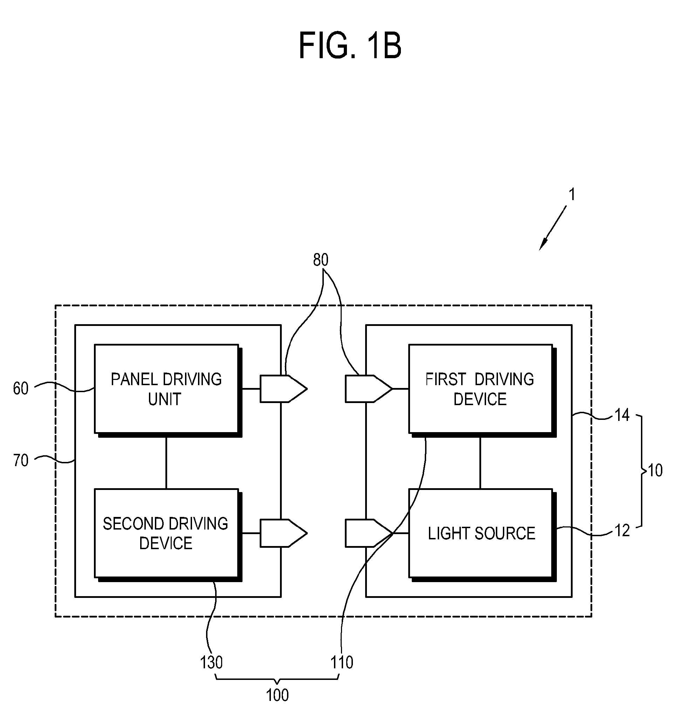

That is, in the control block diagrams of FIG. 1A and FIG. 1B illustrating an electronic apparatus according to the exemplary embodiments of the present invention, the same driving modules are denoted by several reference numerals, to cover the driving modules according to respective exemplary embodiments.

For the sake of convenience, the electronic apparatus described hereinbelow refers to, but is not limited to, an image forming apparatus having an LCD panel.

As illustrated in FIG. 1A, an electronic apparatus according to exemplary embodiments of the present invention includes a light source module 10 having a first board 14 mounting a light source 12 thereon, a driving module 30 having a first driving device 40 mounted on the first board 14 and a second driving device 50 disposed separately from the first driving device 40, a panel driving unit 60, a second board 70 mounting the panel driving unit 60 thereon, and a connection unit 80 interconnecting the first board 14 and the second board 70.

The light source module 10 includes the light source 12, and the first board 14 mounting the light source 12 thereon. The light source 12 emits light in order to supply the light to an LCD panel (not shown). According to the first exemplary embodiment of the present invention, a light emitting diode (LED) chip is used for the light source 12.

The light source 12 used with an LED chip shows a difference in luminous flux, i.e., brightness, according to the input amount of electric current. As the amount of electric current input into the light source increases up to a predetermined value, the intensity of light illuminated from the light source 12 increases accordingly. The luminous flux of the light source 12 increases in proportion to the amount of electronic current input into the light source 12, and the heating value thereof increases relatively. As the higher heating value of the light source 12 influences the electronic apparatus 1, a heat discharging system (not shown) discharging heat from the light source may be provided.

A printed circuit board (PCB) is used for the first board 14. A light source 12 employing an LED chip is mounted on the first board 14. Between the driving modules driving the light source 12, the first driving device 40 is mounted on the first board 14. The first driving device 40 will be described in detail later in conjunction with a driving module 30.

The driving module 30 includes the first driving device 40 mounted on the first board 14 of the light source module 10, and the second driving device disposed separately from the first driving device 40. The second driving device 50 is an exemplary embodiment of the present invention, and is mounted on the second board 70 provided with the panel driving unit 60.

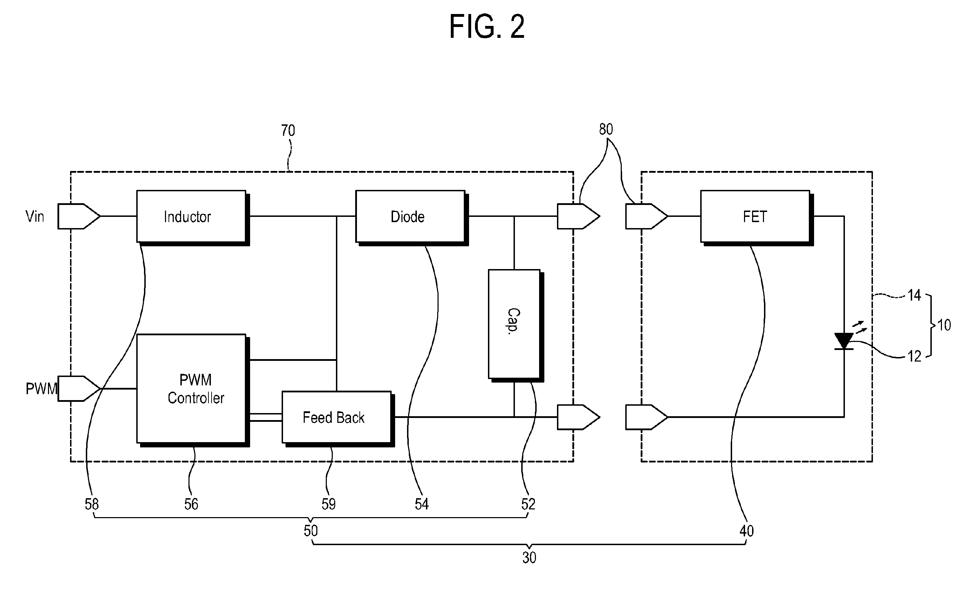

As illustrated in FIG. 2, the first driving device 40 includes a switching element. A field-effect transistor (hereinafter referred to as "FET") is used as the switching element. The FET used as the first driving device 40 is included in a constant voltage conversion constant current supplying circuit, and its on/off switching is controlled by a pulse width modulation (PWM) controller 56 of the second driving device 50 to be described later.

In order to enhance the brightness of the light source 10, if the amount of electric current supplied to the light source module 10 is increased, the heating value of the first driving device 40 is also increased responsively. The switching element used as the first driving device 40 has a heating value relatively higher than the second driving device 50, due to repeated switching controls. For this reason, the first driving device, 40 having a relatively higher heating value, is mounted on the first board 14 mounting the light source 12 thereon. This configuration is advantageous as a heat discharging system to discharge heat from the light source 12 because it enables the first driving device 40 to also discharge heat.

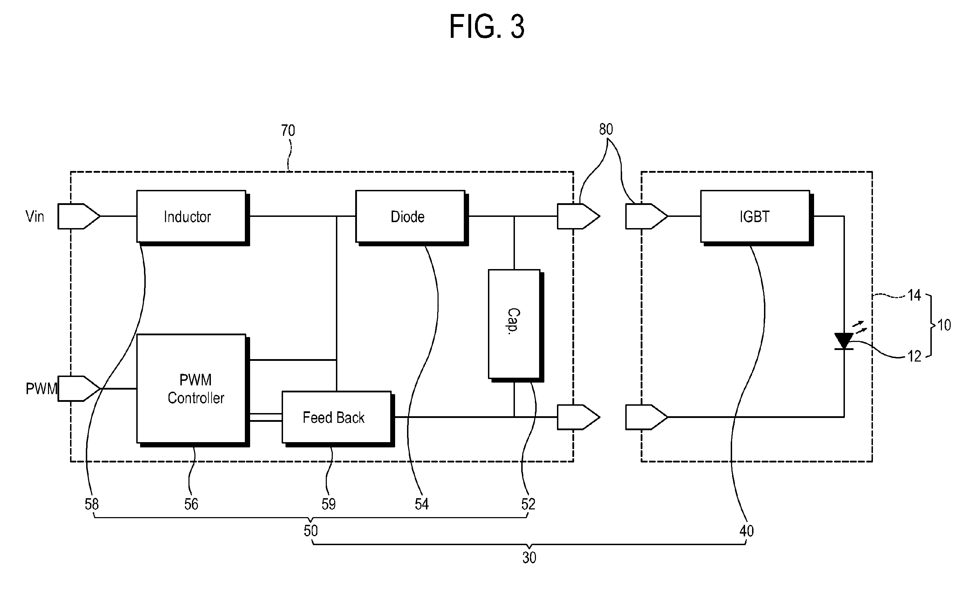

In the example above, the switching element used as the first driving device 40 includes the FET. However, as illustrated in FIG. 3, an insulated gate bipolar transistor (hereinafter referred to as "IGBT") may be used. The switching element used as the first driving device 40 may employ either of FET or IGBT. Here, the first driving device 40 has a heating value relatively higher than the second driving device 50.

According to the first exemplary embodiment of the present invention, the second driving device 50 comprises a capacitor 52, a diode 54, a PWM controller 56, an inductor 58 and a feedback circuit 59. The second driving device 50 has a heating value relatively less than the first driving device 40 mounted on the first board 14.

The capacitor 52 functions to filter output voltages, and the diode 54 interrupts reverse flowing of output currents supplied to the light source 12.

The PWM controller 56 applies a PWM driving signal so as to switch-control the first driving device 40. The inductor 58 is provided in coils, and it may control an abrupt change in electric current supplied to the light source 12 by inducing the voltage in proportion of an amount of change in the electric current. The feedback circuit 59 detects an output voltage of the first driving device 40 and supplies the detected information to the PWM controller 56.

Next, the panel driving unit 60 is provided so as to supply a driving power to drive the LCD panel. The panel driving unit 60 is mounted on the second board 70 of the electronic apparatus 1. On the second board 70 mounting the panel driving unit 60 thereon is mounted the second driving device 50 having a heating value relatively less than the first driving device 40.

According to the first exemplary embodiment of the present invention, the second driving device 50 together with the panel driving unit 60 is mounted on the second board 70, but the second driving device 50 may also be mounted on a driving board (not shown) disposed separately from the second board 70. Accordingly, the electronic apparatus 1 may include the first board 14 mounting the light source and the first driving device 60 thereon, the driving board mounting the second driving device 50 thereon, and the second board 70 mounting the panel driving unit 60 thereon. However, if the second driving device 50 is mounted, i.e., disposed on the second board 70, this may achieve reduction in the production cost and miniaturization of the electronic apparatus 1That is, it may be desirable to mount the second driving device 50 on the second board 70 as in the first exemplary embodiment of the present invention.

A connection unit 80 is interposed between the first board 14 mounting the first driving device 40 thereon and the second board 70 mounting the second driving device 50 thereon. The connection unit 80 functions to electronically interconnect the first driving device 40 and the second driving device 50.

As illustrated in FIG. 1B, an electronic apparatus according to a second exemplary embodiment of the present invention comprises a first driving device 110 mounted on the first board 14 and a second driving device 130 mounted on the second board 70.

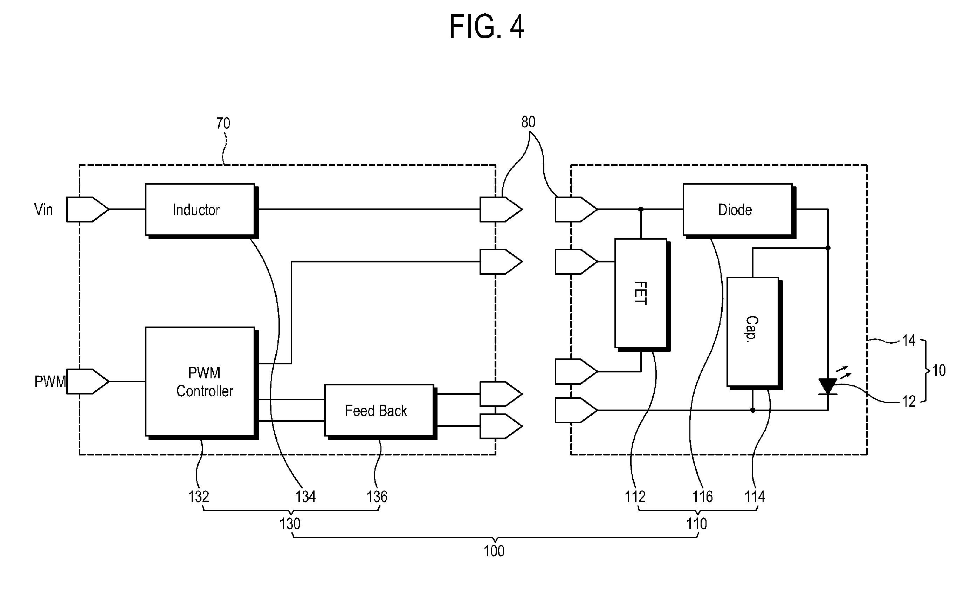

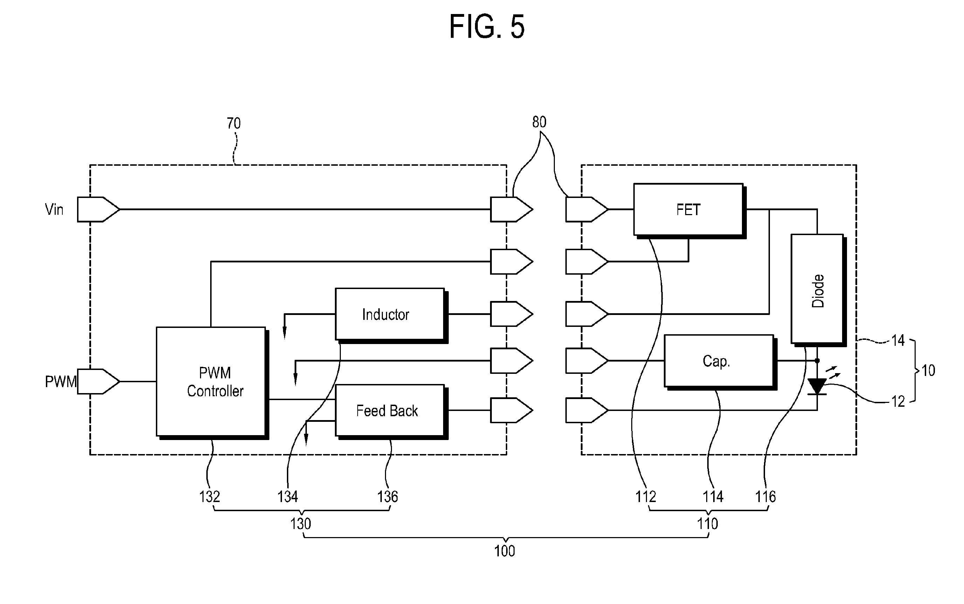

FIGS. 4 and 5 show additional detail of the second exemplary embodiment of the present invention.FIG. 4 shows an exemplary configuration of a "step-down" circuit and FIG. 5 shows an exemplary configuration of a "step-up" circuit. A difference between FIGS. 4 and 5 lies in the arrangement of component elements. However, the component elements themselves are equivalent.

According to the second exemplary embodiment of the present invention, the first driving device 110 comprises a switching element 112, a capacitor 114 and a diode 116. The switching element 112 uses one of FET and IGBT. As described above, the switching element 112 repetitively switches according to a driving signal from the PWM controller 132 of the second driving device 130. The capacitor 114 and the diode 116 have a heating value relatively less than the switching element 112, but they have a heating value relatively higher than the second driving device 130. Generally, with respect to the heating values of the first driving device 110, the heating value of the switching element 112 is higher than the diode 116, and that of the diode 116 is higher than the capacitor 114.

The switching element 112, the capacitor 114 and the diode 116 of the first driving device 110 are respectively mounted on the first board 14 as component elements. However, the switching element 112, the capacitor 114 and the diode 116 of the first driving device 110 may be integrally formed and mounted on the first board 14. That is, the switching element 112, the capacitor 114 and the diode 116 of the first driving device 110 may be integrated as a package, making it possible to reduce the time of assembling them on the first board 14.

According to the second exemplary embodiment of the present invention, the second driving device 130 comprises a PWM controller 132, an inductor 134 and a feedback circuit 136. The PWM controller 132, the inductor 134 and the feedback circuit 136, which constitute the second driving device 130, have heating values relatively less than the first driving device 110. As this heating value of the second driving device 130 has generally a less impact on the electronic apparatus 1, a heat discharging system to discharge heat from the second driving device 130 is not required.

As described above with respect to the exemplary embodiments of the present invention, if the first driving devices 40 and 110 and the second driving devices 50 and 130 are separately disposed, this may improve the heat discharging structure. That is, by providing the light source module 10 having a high heating value with the first driving devices 40 and 110 having relatively higher heating values, the first driving devices 40 and 110 can together discharge heat owing to the heat discharging system to discharge heat from the light source. By mounting the second driving devices 50 and 130 each having a relatively less heating value on the second board 70, the driving board can be eliminated, thereby making it possible to reduce the production cost.

The operation process of the electronic apparatus 1 according to the first exemplary embodiment of the present invention will be described below as an example.

The first driving device 40 having a high heating value is mounted on the light source module 10 configured with the light source 12 and the first board 14. The second driving device 50 having a relatively less heating value than the first driving device 40 is mounted on the second board 70.

When electric current is supplied to the light source 12 so that the light source 12 illuminates, the light source 12 and the first driving device 40 increase their heating values in proportion to the electric current supplied thereto. Accordingly, a heat discharging system capable of discharging heat from the light source 12 and the first driving device 40 is disposed on the light source module 10.

However, as the second driving device 50 mounted on the second board 70 has a heating value relatively less than the first driving device, it may be unnecessary to install a heat discharging system to discharge heat from the second driving device 50.

Meanwhile, a backlight unit for an electronic apparatus according to an exemplary embodiment of the present invention comprises the light source module 10 and the driving modules 30 and 100. As technical configurations and technical features thereof have been described above, redundant detailed description will be omitted.

By separating the first driving devices having a high heating value from the second driving devices having a low heating value, and mounting the first driving device on the board constituting the light source module, the heat discharging structure may be improved, thereby making it possible to potentially reduce the production cost.

Further, by mounting the first driving device on the board mounting the light source thereon, and the second driving device on the second board, the driving module may be simplified in configuration, thereby making it possible to potentially enhance the space efficiency of the electronic apparatus.

The foregoing embodiments are merely exemplary and are not to be construed as limiting the present invention, as the present teaching can be readily applied to other types of apparatuses and methods. Also, the description of the exemplary embodiments of the present invention is intended to be illustrative, and not to limit the scope of the claims, and many alternatives, modifications, and variations will be apparent to those skilled in the art.

## Claims

1. A backlight unit for an electronic apparatus, comprising:
a light source module having a light source and a board mounting the light source thereon; and
a driving module having a first driving device mounted on the board and a second driving device provided separately from the first driving device.

2. The backlight unit of claim 1, wherein the first driving device comprises a switching element.

3. The backlight unit of claim 1 or 2, wherein the first driving device comprises a switching element, a capacitance and a diode.

4. The backlight unit of claim 3, wherein the switching element, the capacitance and the diode are separately mounted on the board.

5. The backlight unit of claim 3, wherein the switching element, the capacitance and the diode are integrally mounted on the board.

6. The backlight unit of claim 2, wherein the switching element comprises any one of a field-effect transistor (FET) and an insulated gate bipolar transistor (IGBT).

7. The backlight unit of claim 2, wherein the second driving device comprises a diode, a capacitance, a PWM controller, an inductor and a feedback circuit.

8. The backlight unit of claim 3, wherein the second driving device comprises a PWM controller, an inductor and a feedback circuit.

9. An electronic apparatus, comprising:
a liquid crystal display (LCD) panel; and
the backlight unit according to any one of claims 1-8.

10. The electronic apparatus of claim 9, wherein the light source comprises a light-emitting diode (LED) chip.

11. The electronic apparatus of claim 9 or 10, further comprising a panel driving unit driving the LCD panel, and
further comprising a main board mounting the panel driving unit and the second driving device thereon.
